# EUROPÄISCHE PATENTSCHRIFT

(11) **EP 0 435 357 B1**
(45) Veröffentlichungstag und Bekanntmachung des Hinweises auf die Patenterteilung: **18.05.1994**
(21) Anmeldenummer: 90202368.8
(22) Anmeldetag: 06.09.1990
(51) Int. Cl.: F16F 9/46

(54) **Bypass-Ventil mit abstimmbaren Kennungen für regelbare und steuerbare Schwingungsdämpfer**
Bypass valve with variable characteristics for adjustable vibration damper
Soupape de dérivation à caractéristiques variables pour amortisseurs de vibrations réglables

(30) Priorität: 22.12.1989 DE 3942477
(43) Veröffentlichungstag der Anmeldung: 03.07.1991
(73) Patentinhaber: AUGUST BILSTEIN GMBH & CO. KG, 58240 Ennepetal (DE)
(72) Erfinder: Huang, Zhen, D-5600 Wuppertal 1 (DE)

(56) Entgegenhaltungen:
- EP-A- 0 207 409
- DE-A- 3 608 738
- DE-A- 3 704 712
- DE-A- 3 832 625
- DE-A- 3 844 642

## Beschreibung

Die Erfindung betrifft ein Bypass-Ventil mit abstimmbaren Kennungen für regelbare und steuerbare Schwingungsdämpfer wie sie in Kraftfahrzeugen verwendet werden. Diese Schwingungsdämpfer bestehen aus einem Zylinder, der in der Regel mit einem Dämpfungsmedium gefüllt ist. Eine abgedichtet eintauchende axialverschiebbar angeordnete Kolbenstange, die mit einem an ihrem innerhalb des Zylinders befestigten Dämpfungskolben den Zylinder in zwei Arbeitskammerhälften trennt. Durch die Unterteilung wird der Zylinder mit wechselnden Hoch- und Niederdruckbereichen unterteilt. Innerhalb des Dämpfungskolbens befinden sich durch Federkraft beaufschlagte Drosselkörper.

Aus der deutschen Offenlegungsschrift DE 38 32 625 A1 ist ein Schwingungsdämpfer mit veränderbarer Dämpfungscharakteristik für Kraftfahrzeuge bekannt, bei dem das die Dämpfungscharakteristik einstellende, aus zwei elektromagnetisch steuerbaren, mehrere Bypaßdurchlässe verschließenden Steuerschiebern bestehende Bypass-Steuerventil direkt im Kolben integriert ist. Ein erster ringförmig ausgebildeter, gegen eine Feder verschiebbarer Steuerschieber mit mehreren Bohrungen ist konzentrisch um die die Bypass-Passage darstellende Mittelbohrung des Kolbens angeordnet. Bei Bestätigung des Elektromagneten gibt der Steuerschieber mehrere Durchlässe zur Bypass-Passage frei. Ein weiterer Steuerschieber ist in der Mittelbohrung des Kolbens angeordnet und steuert Durchlässe, die mit einem Teil der durch den Steuerschieber freigebbaren Bypass-Durchlässe zusammenwirken. Somit können durch wahlweises Ansteuern der Elektromagneten drei unterschiedliche Dämpfungscharakteristiken eingestellt werden, die jedoch für die Zug- und Druckstufe des Schwingungsdämpfers gleich sind, da die Bypass-Druchlässe jeweils nur in umgekehrter Richtung von der Dämpfungsflüssigkeit durchströmt werden.

Die Aufgabe der Erfindung ist es, ein Bypass-Ventil mit abstimmbaren Kennungen für regelbare und steuerbare Schwingungsdämpfer für Kraftfahrzeuge zu schaffen, wobei eine gezielte Auswahl der Bypass-Durchlässe für die Zug- und Druckstufe vorgenommen werden soll. Die Zahl der verwendeten Bauteile soll gering sein, das Bypass-Ventil soll in Verbindung mit einem Seriendämpfungskolben die gewünschte Dämpfungs-Kennung realisieren können. Dieses soll sowohl für die Druck- als auch für die Zugstufe gelten.

Die Aufgabe wird erfindungsgemäß durch den Patentanspruch gelöst.

Der Vorteil dieses Bypass-Ventiles liegt darin, daß bei einer unkomplizierten und kompakten Bauweise gleichzeitig sehr große mögliche Durchströmquerschnitte realisiert werden können. Besonders bei semi-aktiven Fahrwerken, welche nach der Skyhook-Regelphilosophie arbeiten, ist es wichtig, daß die Kennung des oder der Schwingungsdämpfer in Zug- und Druckstufe einfach abgestimmt werden können. Die Steuereinheit ist von dem eigentlichen Dämpfungskolben getrennt. Durch diese Abkopplung des Dämpfungskolbens wird die Querschnittveränderung nach außen in das Bypass-Ventil gelegt, um so eine Kennung aufzubauen. Innerhalb des Bypass-Ventiles befinden sich gesteuerte Rückschlagventile, deren Ansprechschwellen durch Vorspannung bzw. Steifigkeit der entsprechenden Federelemente verändert werden können.

Durch die vorliegende Erfindung ist es möglich, getrennt für die Druck und Zugstufe, eine Kennung entsprechend den Erfordernissen einzustellen. Mit der Ansteuerung ist in diesem Falle nicht der Magnet des Bypass-Ventiles gemeint, sondern es wird die Ansteuerung des Ventiles damit zum Ausdruck gebracht. Durch eine gezielte Abstimmung der Federelemente kann jede gewünschte Kennung des Schwingungsdämpfers realisiert werden. Bei dem Bypass-Ventil handelt es sich um ein Ventil mit einem Ventilschieber, der nicht innerhalb des Dämpfungskolbens integriert ist. Mit dem so aufgebauten Bypass-Ventil läßt sich die Steuerung für ein semi-aktives Fahrwerk ohne Relativgeschwindigkeitssensoren sicher und den entsprechenden Anfordernissen nach realisieren. Ohne Bypass hat der Dämpfungskolben eine ganz bestimmte Kennung, fahrzeugspezifisch angepaßt. Mit Hilfe des Bypass-Ventiles kann diese Kennung zusätzlich optimiert werden. Durch diese Maßnahme der Optimierung der Kennung vom eigentlichen Kolben und dessen Steuerung kann die Hauptkennung des Kolbens besser abgestimmt werden. Aus den vorgenannten Gründen kann deshalb der Dämpfungskolben ein Serienkolben sein.

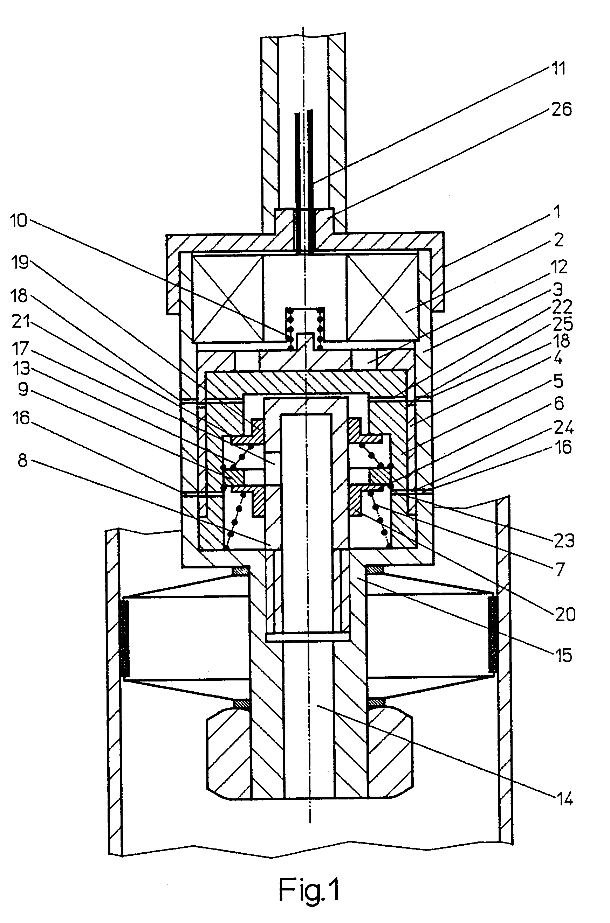

Die Erfindung soll anhand eines Ausführungsbeispiels näher erläutert werden. In der Figur ist ein Bypaß-Steuerventil gemäß der Erfindung dargestellt. Dieses Bypass-Steuerventil kann über die Kolbenaufnahme 15 mit dem, in dem innerhalb des Schwingungsdämpfers vorhandenen, Dämpfungskolben verbunden werden. Auf der anderen gegenüberliegenden Seite wird über die Kolbenstangenverbindung 26 die Kolbenstange mit dem Bypass-Ventil verbunden. Innerhalb eines Gehäuseunterteiles 3 findet sich sowohl der Elektromagnet als auch die Steuerorgane für den Bypass. Aus fertigungstechnischen Gründen ist das Bypass-Ventil rotationssymmetrisch aufgebaut. In der Achse befindet sich ein Innenteil 8, welches in seinem oberen Drittel Bypass-Durchlässe 17 aufweist. Um dieses Innenteil 8 sind die beweglichen Ventile 20, 19 angeordnet. Diese Ventile werden durch entsprechende Federelemente 13, 7 gegen einen Abstützring 9 und ein weiteres Innenteil 5 gehalten. Die Wahl der Federelemente, die aus Druckfedern oder Federscheiben bestehen, richtet sich nach der gewünschten Kennung für die Druck- oder Zugstufe, die durch das Bypass-Ventil erzielt werden soll. Das Innenteil 5, welches über das bereits vorbeschriebene Innenteil 8 gesetzt wird, weist zwei umlaufende auf dem Umfang verteilte Bypass-Durchlässe 22 und 23 auf. Diese Bypass-Durchlässe sind voneinander unabhängig. Sie sind einmal für die Druck- und für die Zugstufe zuständig. Aus diesem Grunde ist jeweils der entsprechende Durchlaß auch dem entsprechenden Rückschlagventil zugeordnet.

Über das rotationssymmetrische Innenteil 5 fügt sich der Ventilschieber 4. Der Ventilschieber 4 besitzt entsprechende Bypassdurchlässe 25 und 24. Der Ventilschieber 4 wird durch ein Federelement 10 in einer Grundstellung gehalten. Durch die Betätigung des Elektromagneten 2 über die elektrischen Anschlüsse 11 wird der Ventilschieber 4 aus seiner Grundstellung herausgebracht. Damit das möglicherweise oberhalb des Ventilschiebers 4 befindliche Dämpfungsmedium kein Dämpfungspolster aufbaut, sind in dem Ventilschieber 4 Ausgleichsbohrungen 12 angebracht. In der Grundstellung d.h. der Elektromagnet wird nicht bestromt, befinden sich die Bypass-Durchlässe 16, 24 und 23 auf einer Ebene. Das Dämpfungsmedium kann somit ungestört hindurchtreten. Diese Stellung gibt die Druckstufe des Dämpfungsventiles wieder. Durch den anstehenden Druck in der Bypass-Passage 14 wird das Rückschlagventil 20 beaufschlagt. Entsprechend der Federsteifigkeit dieses Ventiles öffnet das Ventil ab einem bestimmten Druck und das Dämpfungsmedium kann somit über die Bypass-Durchlässe 16, 23 und 24 in die obere Arbeitskammerhälfte des Dämpfungszylinders fließen. Bleibt der Steuerschieber in dieser Stellung stehen, so würden bei der Betätigung der Zugstufe die Bypass-Durchlässe durch das Rückschlagventil 20 geschlossen sein. Dies hat zur Folge, daß das Dämpfungsmedium durch die im Dämpfungskolben vorhandenen Ventile hindurch muß.

Wird nun der Elektromagnet 2 bestromt, so zieht der Ventilschieber 4 an und verschließt damit gleichzeitig die Bypass-Passagen 16, 23 und 24. Auf der anderen Seite wird aber eine andere Bypass-Passage geöffnet, nämlich die Bypass-Öffnungen 18, 22 und 25 werden in Übereinstimmung gebracht. Das oberhalb des Dämpfungskolbens anstehende Dämpfungsmedium kann somit durch die vorgeschriebene Bypass-Öffnung treten und trifft auf das Rückschlagventil 19. Dieses Rückschlagventil 19 wird ebenfalls durch ein Federelement 13 in einer Grundstellung gehalten. Auch dieses Federelement bestimmt durch entsprechende Vorspannung und Steifigkeit den Durchlaß des Dämpfungsmediums. Ist der Druck entsprechend groß genug, so wird das Rückschagventil 19 geöffnet und das Dämpfungsmedium kann über den Bypass-Durchlaß 17 und die Bypass-Passage 14 in den unteren Bereich des Dämpfungszylinders gelangen. In dieser zweiten Stellung des Ventilschiebers 4 ist die Druckstufe verschlossen und das Dämpfungsmedium muß somit durch die Ventile des Dämpfungskolbens. Gleichzeitig aber ist in dieser Stellung die Zugstufe aktiviert und das Dämpfungsmedium kann durch die Bypass-Durchlässe 18, 22 und 25 hindurchtreten.

Der Ventilschieber 4 kann durch einen entsprechenden im Fahrzeug vorhandenen Rechner angesteuert werden. Die Ansteuerung geschieht entsprechend der verwendeten Regelphilosophie. Da der Ventilschieber 4 nur zwei Stellungen einnehmen kann, eignet sich das Bypass-Ventil besonders für semi-aktive Fahrwerke. Darüber hinaus ist es möglich, getrennt für die Druckals auch für die Zugstufe, eine individuelle Kennung zu realisieren. Die Realisierung geschieht wie bereits vorbeschrieben über die entsprechende Ausbildung der Federelemente. Durch die Verwendung des erfindungsgemäßen Gegenstandes kann die Kennung unabhängig von dem verwendeten Seriendämpfungskolben eingestellt und auch realisiert werden. Ferner können die durch die Ansteuerung des Elektromagenten bestimmte Regelphilosophien realisiert werden.

## Patentansprüche

1. Bypass-Steuerventil mit abstimmbaren Kennungen für regelbare und steuerbare Schwingungsdämpfer für Kraftfahrzeuge mit einem Dämpfungsflüssigkeit enthaltenden Zylinder, einer darin abgedichtet eintauchenden, axial verschieblich angeordneten Kolbenstange und einem daran befestigten Dämpfungskolben, der den Zylinderraum in zwei Arbeitskammerhälften unterteilt und mit Dämpfungskraft erzeugenden Flüssigkeitsdurchtrittkanälen versehen ist, deren wirksamer Querschnitt durch gegen Federwirkung verstellbare Drosselorgane veränderbar ist, und zusätzlich einer Bypass-Passage (14) in der hohlen Kolbenstange, deren Durchlaßquerschnitt mittels eines von einem Elektromagneten (2) axial gegen eine Feder (10) verschiebbaren, um die Bypass-Passage (14) angeordneten, hülsenförmigen Ventilschieber (4) gesteuert wird, dadurch gekennzeichnet, daß das Bypass-Steuerventil in einer Kolbenstangenerweiterung oder einer erweiterten Bohrung der Kolbenstange angeordnet ist und der Bypass-Passage (14) wenigstens zwei koaxial in der Kolbenstangenerweiterung oder der erweiterten Bohrung der Kolbenstange angeordnete, druckbeaufschlagbare Rückschlagventile (19, 20) derart zugeordnet sind, daß ein Rückschlagventil (19) bei Hochdruck in der oberen Arbeitskammerhälfte und das andere Rückschlagventil (20) bei Hochdruck in der unteren Arbeitskammerhälfte des Zylinderraumes öffnet und der hülsenförmige Ventilschieber (4) derart steuerbar angeordnet ist, daß jeweils nur eine Bypass-Verbindung (18, 22, 25 oder 16, 23, 24) zwischen einem der Rückschlagventile (19, 20) und der Arbeitskammerhälften und der Bypass-Passage (14) geöffnet ist.

2. Bypass-Steuerventil nach Anspruch 1, dadurch gekennzeichnet, daß der Ventilschieber (4) in seiner Grundstellung über seinen Bypass-Durchlaß (24) und die Bypass-Durchlässe (16, 23), das Rückschlagventil (20) und die Bypass-Passage (14, 17) die obere Arbeitskammerhälfte des Schwingungsdämpfers mit der unteren Arbeitskammerhälfte verbindet, wobei der Bypass-Durchlaß (25) der Zugstufe geschlossen ist.

3. Bypass-Steuerventil nach Anspruch 1; dadurch gekennzeichnet, daß der Ventilschieber (4) durch die Betätigung des Elektromagneten (2) in der Zugstufe über seinen Bypass-Durchlaß (25) und die Bypass-Durchlässe (18, 22), das Rückschlagventil (19) und die Bypass-Passage (14, 17) die obere Arbeitskammerhälfte des Schwingungsdämpfers mit der unteren Arbeitskammerhälfte verbindet, wobei der Bypass-Durchlaß (24) in der Druckstufe verschlossen ist.

4. Bypass-Steuerventil nach einem der Ansprüche 1 bis 3, dadurch gekennzeichnet, daß die Kennungsabstimmung der Rückschlagventile (19, 20) durch die Federelemente (7, 13) vorgenommen wird.

5. Bypass-Steuerventil nach Anspruch 1 oder 4, dadurch gekennzeichnet, daß der Ventilschieber (4) in seiner Grundstellung über seinen Bypass-Durchlaß (25) und die Bypass-Durchlässe (18, 22), das Rückschlagventil (19) und die Bypass-Passage (14, 17) der obere Arbeitskammerhälfte des Schwingungsdämpfers mit der unteren Arbeitskammerhälfte verbindet, wobei der Bypass-Durchlaß (24) verschlossen ist.

## Claims

1. Bypass control valve with adjustable characteristics for regulatable and controllable vibration dampers for motor vehicles, having a cylinder containing damping fluid, an axially displaceably disposed piston rod entering therein in a sealed manner and a damping piston which is secured thereto and which divides the cylinder chamber into two working chamber halves and is provided with fluid flow-through passages which produce damping force and whose effective cross section can be changed by throttle members, which can be adjusted against the spring action, and additionally a bypass passage (14) in the hollow piston rod, whose flow-through cross section is controlled by means of a sleeve-shaped valve spool (4) which can be displaced by a solenoid (2) axially against a spring (10) and which valve spool (4) is disposed about the bypass passage (14), characterised in that the bypass control valve is disposed in a piston rod enlarged region or in an enlarged bore of the piston rod and at least two non-return valves (19, 20), which are disposed coaxial in the piston rod enlarged region or the enlarged bore of the piston rod and which non-return valves can be acted upon by pressure, are allocated to the bypass passage (14) in such a way that a non-return valve (19) opens in the case of a high pressure in the upper working chamber half and the other non-return valve (20) opens in the case of a high pressure in the lower working chamber half of the cylinder chamber and the sleeve-shaped valve spool (4) can be controlled in such a way that in each case only one bypass connection (18, 22, 25 or 16, 23, 24) is opened between one of the non-return valves (19, 20) and the working chamber halves and the bypass passage (14).

2. Bypass control valve according to claim 1, characterised in that the valve spool (4) in its normal position connects by way of its bypass opening (24) and the bypass openings (16, 23), the non-return valve (20) and the bypass passage (14, 17) the upper working chamber half of the vibration damper to the lower working chamber half, wherein the bypass opening (25) of the pull stage is closed.

3. Bypass control valve according to claim 1, characterised in that the valve spool (4) by virtue of actuating the solenoid (2) in the pull stage connects by way of its bypass opening (25) and the bypass openings (18,22), the non-return valve (19) and the bypass passage (14, 17) the upper working chamber half of the vibration damper to the lower working chamber half, wherein the bypass opening (24) is closed in the push stage.

4. Bypass control valve according to one of claims 1 to 3, characterised in that the characteristic of the non-return valves (19, 20) is determined by virtue of the resilient elements (7, 13).

5. Bypass control valve according to claim 1 or 4, characterised in that the valve spool (4) in its normal position connects by way of its bypass opening (25) and the bypass openings (18, 22), the non-return valve (19) and the bypass passage (14, 17) the upper working chamber half of the vibration damper to the lower working chamber half, wherein the bypass opening (24) is closed.

## Revendications

1. Vanne de dérivation pilotable, à caractéristiques variables pour amortisseurs de vibrations réglables et pilotables pour véhicules, avec un cylindre contenant un liquide d'amortissement, une tige de piston mobile axialement, plongeant de manière étanche dans ce cylindre et, fixé à cette tige, un piston d'amortissement qui partage l'espace délimité par le cylindre en deux demi-chambres de travail, et qui est muni de canaux de traversée de liquide créant une force d'amortissement, dont la section transversale effective est modifiable par l'intermédiaire d'organes d'étranglement réglables à l'encontre de l'action de ressorts, et en outre un passage de dérivation (14) dans la tige de piston creuse, dont la section de passage est commandée à l'aide d'une soupape (4) en forme de manchon, entourant le passage de dérivation (14) et déplaçable axialement sous l'action d'un électroaimant (2) à l'encontre d un ressort (10), caractérisée en ce que la soupape de dérivation est montée dans un élargissement de la tige de piston ou dans un alésage élargi de la tige de piston, et en ce qu'au moins deux clapets anti-retour (19,20) commandés par la pression, montés coaxiaux dans l'élargissement de la tige de piston ou dans l'alésage élargi de la tige de piston, sont associés de telle sorte au passage de dérivation (14) qu'un clapet anti-retour (19) s'ouvre pour une haute pression dans la demi-chambre de travail supérieure, et l'autre clapet anti-retour pour une haute pression dans la demi-chambre de travail inférieure de l'espace délimité par le cylindre, et en ce que la soupape (4) en forme de manchon est montée pour pouvoir être commandée de telle sorte que chaque fois une seule liaison de dérivation (18, 22, 25 ou 16, 23, 24) est ouverte entre l'un des clapets anti-retour (19, 20) et les demi-chambres de travail et le passage de dérivation (14).

2. Vanne de dérivation pilotable suivant la revendication 1, caractérisée en ce que dans sa position normale, la soupape (4) met en communication la demi-chambre de travail supérieure de l'amortisseur de vibrations et la demi-chambre de travail inférieure par son passage de dérivation (24) et les passages de dérivation (16, 23), le clapet anti-retour (20) et les passages de dérivation (14, 17), le passage de dérivation (25) de la phase de traction étant fermé.

3. Vanne de dérivation pilotable suivant la revendication 1, caractérisée en ce que, sous la commande de l'électro-aimant (2), la soupape (4) met en communication, dans la phase de traction, la demi-chambre de travail supérieure de l'amortisseur de vibrations et la demi-chambre de travail inférieure par son passage de dérivation (25) et les passages de dérivation (18, 22), le clapet anti-retour (19) et les passages de dérivation (14, 17), le passage de dérivation (24) pour la phase de compression étant fermé.

4. Vanne de dérivation pilotable suivant l'une des revendications 1 à 3, caractérisée en ce que le réglage des caractéristiques des clapets anti-retour (19,20) est assuré par des éléments à ressort (7, 13).

5. Vanne de dérivation pilotable suivant la revendication 1 ou 4, caractérisée en ce que la soupape (4) dans sa position normale, relie la demi-chambre de travail supérieure de l'amortisseur de vibrations à la demi-chambre de travail inférieure par son passage de dérivation (25) et les passages de dérivation (18, 22), le clapet anti-retour (19) et les passages de dérivation (14, 17), le passage de dérivation (24) étant fermé.
